(19) **Europäisches Patentamt / European Patent Office / Office européen des brevets**

(11) **EP 3 745 116 A1**

(12) # EUROPEAN PATENT APPLICATION
published in accordance with Art. 153(4) EPC

(43) Date of publication:
**02.12.2020 Bulletin 2020/49**

(21) Application number: **18818972.4**

(22) Date of filing: **19.12.2018**

(51) Int Cl.:
**G01N 21/65** (2006.01)

(86) International application number:
**PCT/CN2018/122068**

(87) International publication number:
**WO 2019/128801 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.12.2017 CN 201711442673**

(71) Applicant: **Nuctech Company Limited**
**TongFang Building**
**Shuangqinglu**
**Haidian District**
**Beijing 100084 (CN)**

(72) Inventor: **The designation of the inventor has not yet been filed**

(74) Representative: **Brunner, John Michael Owen**
**Carpmaels & Ransford LLP**
**One Southampton Row**
**London WC1B 5HA (GB)**

(54) **RAMAN SPECTROSCOPIC DETECTION DEVICE AND METHOD FOR MONITORING DETECTION SECURITY THEREOF**

(57)     The disclosure provides a Raman spectrum detection apparatus and a method of monitoring detection security thereof. The method includes: emitting excited light by a light source and guiding the excited light to a sample; collecting a light signal generated by the sample under irradiation of the excited light and generating spectrum data representing the light signal; determining a first part representing an excited light component of the light signal and a second part representing a Raman scattered component and a fluorescence component of the light signal, of the spectrum data; calculating a first parameter representing an amplitude of spectral intensity, and a second parameter representing a fluctuation of spectral intensity, of each of the first and second parts; comparing the first parameters, and comparing the second parameters, of the first and second parts; and determining whether or not the sample is a deep-colored substance based on comparison results.

Figure 2

EP 3 745 116 A1

## Description

### CROSS-REFERENCE TO RELATED APPLICATION

This application claims the priority benefit of the Chinese Patent Application No. No.201711442673.2 filed on December 26, 2017 in the State Intellectual Property Office of China, the whole disclosure of which is incorporated herein by reference.

### TECHNICAL FIELD

Embodiments of the present disclosure generally relate to the field of Raman spectrum detection, and particularly, to a Raman spectrum detection apparatus and a method of monitoring detection security of the Raman spectrum detection apparatus.

### DESCRIPTION OF THE RELATED ART

Raman spectrum analysis technology is a non-contact spectrum analysis technology based on Raman scattering effect, which can qualitatively and quantitatively analyze the composition of a substance. Raman spectrum is a molecular vibration spectrum that can represent the fingerprint characteristics of molecules, and can be used for the inspection of substance. Raman spectrum detection can inspect and identify the substance by the Raman spectrum generated by the Raman scattering effect of the object to be inspected with respect to exciting light. Raman spectrum detection technology has been widely used in the fields of liquid safety inspection, explosive detection, drug detection, medicine detection and the like.

In applications of the Raman spectrum analysis technologies, there are multifarious objects to be detected, and various substances therein have different physical characteristics and thereby have different thermal sensitivities to laser irradiation used in Raman spectrum analysis technology. Laser having a high power density is generally used as an exciting light source in Raman spectrum detection, for example, near infrared laser light of 785nm has a stronger thermal effect, thus in case that components of a sample to be detected are not known, a rushed detection made by using such laser light may possibly cause the sample to be burned and damaged by the laser light, or even lead to burning or exploding of a flammable and explosive chemical, resulting in personal and property loss.

### SUMMARY

The present disclosure is made to at least partly solve or alleviate at least one aspect of the above mentioned and other disadvantages or problems in prior arts.

According to an aspect of the present disclosure, there is provided a method of monitoring detection security of a Raman spectrum detection apparatus, comprising steps of:

emitting excited light by a light source and guiding the excited light to a sample to be detected;
collecting a light signal generated by the sample under irradiation of the excited light and generating spectrum data representing the light signal;
determining a first part of the spectrum data representing an excited light component of the light signal and a second part of the spectrum data representing a Raman scattered component and a fluorescence component of the light signal;
calculating a first parameter, which represents an amplitude of a spectral intensity, and a second parameter, which represents a fluctuation of the spectral intensity, of each of the first part and the second part;
comparing the first parameter of the first part with the first parameter of the second part, and comparing the second parameter of the first part with the second parameter of the second part; and
determining whether or not the sample is a deep-colored substance based on comparison results.

In one embodiment, the step of determining whether or not the sample is a deep-colored substance based on comparison results comprises:

determining the sample is a deep-colored substance, if the first parameter of the first part is smaller than the first parameter of the second part and the second parameter of the first part is greater than the second parameter of the second part; and
determining the sample is a transparent substance, if the first parameter of the first part is smaller than a mean value of the second part and the second parameter of the first part is smaller than the second parameter of the second part.

In one embodiment, the first parameter includes a mean value of spectral intensities, and the second parameter includes a standard deviation of spectral intensities.

In one embodiment, the mean value and the standard deviation are calculated by using following equations:

$$u = \sum_{i=1}^{n} X_i \bigg/ n,$$

$$\sigma = \sqrt{\frac{1}{n} \sum_{i=1}^{n} (X_i - u)^2},$$

where, $u$ represents the mean value, $\sigma$ represents the

standard deviation, $X_i$ represents the ith spectrum data, and n represents the number of spectrum data of the first part or the second part.

In one embodiment, the first part represents spectrum data of the light signal having a Raman shift within a range from -10cm$^{-1}$ to 10cm$^{-1}$, and the second part represents spectrum data of the light signal having a Raman shift within a range from 350cm$^{-1}$ to 2000cm$^{-1}$.

In one embodiment, the method further comprises: stopping irradiation of the excited light to the sample if it is determined that the sample is a deep-colored substance.

In one embodiment, the excited light is emitted by the light source within a preset time duration so as to irradiate the sample.

In one embodiment, the Raman spectrum detection apparatus comprises a spectrometer configured for detecting the light signal generated by the sample under irradiation of the excited light so as to generate the Raman spectrum of the detected sample, and the step of collecting a light signal generated by the sample under irradiation of the excited light and generating spectrum data representing the light signal comprises: collecting by the spectrometer the light signal generated by the sample under irradiation of the excited light so as to generate the spectrum data.

In one embodiment, the excited light component of the light signal from the sample includes a Rayleigh-scattered component.

According to another aspect of the present disclosure, there is provided a Raman spectrum detection apparatus, comprising:

a spectrometer configured to collect a light signal generated by a sample under irradiation of excited light so as to generate spectrum data representing the light signal; and
a data processor configured to:

receive the spectrum data from the spectrometer, and determining a first part of the spectrum data representing an excited light component of the light signal and a second part of the spectrum data representing a Raman scattered component and a fluorescence component of the light signal;
calculate a first parameter, which represents an amplitude of a spectral intensity, and a second parameter, which represents a fluctuation of the spectral intensity, of each of the first part and the second part;
compare the first parameter of the first part with the first parameter of the second part, and compare the second parameter of the first part with the second parameter of the second part; and
determine whether or not the sample is a deep-colored substance based on comparison results.

In one embodiment, the data processor is further configured to:

determine the sample is a deep-colored substance, if the first parameter of the first part is smaller than the first parameter of the second part and the second parameter of the first part is greater than the second parameter of the second part; and
determine the sample is a transparent substance, if the first parameter of the first part is smaller than the first parameter of the second part and the second parameter of the first part is smaller than the second parameter of the second part.

In one embodiment, the first parameter includes a mean value of spectral intensities, and the second parameter includes a standard deviation of spectral intensities.

In one embodiment, the data processor is further configured to calculate the mean value and the standard deviation by using following equations:

$$u = \sum_{i=1}^{n} X_i \bigg/ n ,$$

$$\sigma = \sqrt{\frac{1}{n} \sum_{i=1}^{n} (X_i - u)^2} ,$$

where, $u$ represents the mean value, $\sigma$ represents the standard deviation, $X_i$ represents the ith spectrum data, and n represents the number of spectrum data of the first part or the second part.

In one embodiment, the data processor is further configured to: determine a part of the spectrum data corresponding to the light signal having a Raman shift in a range from -10cm$^{-1}$ to 10cm$^{-1}$ as the first part, and determine another part of the spectrum data corresponding to the light signal having a Raman shift in a range from 350cm$^{-1}$ to 2000cm$^{-1}$ as the second part.

In one embodiment, the Raman spectrum detection apparatus further comprises: a light source for emitting the excited light; and a controller configured to control the light source to stop irradiation of the excited light to the sample when the sample is determined to be the deep-colored substance by the data processor.

In one embodiment, the light source is configured to emit the excited light to irradiate the sample within a preset time duration, and the spectrometer is configured to collect the light signal generated by the sample under irradiation of the excited light so as to generate the spectrum data, based on which the data processor determines whether or not the sample is the deep-colored substance.

In one embodiment, the preset time duration is in a range from 0.5 milliseconds to 5 milliseconds.

In one embodiment, the excited light component of the light signal from the sample includes a Rayleigh-scattered component.

Other objects and advantages of the present disclosure will become apparent from the following description of the present disclosure taken in conjunction with the accompanying drawings, and may give a comprehensive understanding of the present disclosure.

**BRIEF DESCRIPTION OF THE DRAWINGS**

The above and other features and advantages of the present disclosure will become more apparent with reference to the accompanying drawings, which are schematic and should not be interpreted as being limitative to the present disclosure, and in which:

Figure 1 is a schematic diagram showing an arrangement of a Raman spectrum detection apparatus according to an exemplary embodiment of the present disclosure;

Figure 2 is a flow chart showing a method of monitoring detection security of a Raman spectrum detection apparatus, according to an exemplary embodiment of the present disclosure; and

Figure 3 is a schematic diagram showing division of obtained spectrum data according to an exemplary embodiment of the present disclosure.

**DETAILED DESCRIPTION OF EXEMPLARY EMBODIMENTS**

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

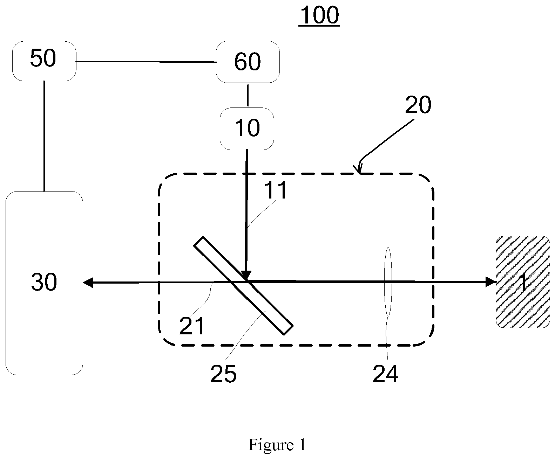

Figure 1 schematically shows an arrangement of a Raman spectrum detection apparatus according to an exemplary embodiment of the present disclosure. As shown in the Figure, a Raman spectrum detection apparatus 100 includes: a laser 10 configured to emit excited light 11; an optical device or assembly 20 configured to guide the excited light 11 to a sample 1 to be detected and to collect a light signal from the sample 1; and a spectrometer 30 configured to process the light signal collected by the optical device or assembly 20 so as to generate spectrums of the sample 1 under irradiation of the excited light, and the spectrums include a Raman spectrum and a fluorescence spectrum from the sample, and also includes spectrums (mainly including Rayleigh scattered light) of portions of the excited light which are not filtered out and scattered or reflected by the sample. As an example, the Raman spectrum of the sample generated by the spectrometer may be compared with a Raman spectrum of a known substance, so that the components of the sample may be determined. This comparison may be achieved by for example a computer or processor. Laser is generally used as a specific example of the light source, and it will be understood by those skilled in the art that any one of other kinds of excited light sources may also be adopted in the Raman detection as required, and will not be particularly limited in the present disclosure.

During the Raman spectrum detection, it will generally face a security issue where a temperature of the sample is increased due to absorbing heat during irradiation of the laser light onto the sample, which thereby may result in ablation, or even burning or exploding of the detected sample. For a deep-colored substance, especially a non-transparent substance or black substance, a possibility of degradation, ablation, burning or exploding of the substance due to too stronger power density of the laser light will be increased. It will be appreciated that, the expression"deep-colored substance"represents a substance which will absorb heat under irradiation of the excited light during the Raman spectrum detection and thus will be easily ablated, burned or exploded, and which may have a grayscale in a range from 0 to 50, preferably, in a range from 0 to 30. Of course, a specific form of the deep-colored substance may be determined by those skilled in the art according to actual applications, specific detection conditions or historical experiences.

In an embodiment of the present disclosure, as shown in Figure 1, the Raman spectrum detection apparatus further includes or is further provided with a data processor 50 for receiving the spectrum data from the spectrometer, and processing the spectrum data so as to determine whether or not the sample 1 is a deep-colored substance (including but not limited to, a non-transparent substance or a black substance). Determining whether or not the sample 1 is a deep-colored substance may be made before a normal detection of the sample. For example, the sample may be irradiated by the excited light within a predetermined time duration (shorter than a time duration for a normal or conventional Raman spectrum detection), so that spectrum data of a light signal generated by the sample under irradiation of the excited light may be obtained by the spectrometer, thereby the type of the sample, for example, a deep-colored substance or a transparent substance, may be determined based on the spectrum data before the normal detection of the sample. In an example, when determining the type of the sample in advance, a time duration for irradiation of the excited light at a time may be smaller, for example 0.5 milliseconds to 5 milliseconds, which may prevent dangerous events from occurring due to violent reaction of the excited light with the sample caused by too large energy of the excited light and avoid the sample from be damaged due to irradiation of the laser light within a longer time period; accordingly, the spectrometer may collect the light signal from the sample within the preset time duration, For example, 5ms.

The excited light emitted from the light source 10, when reaching the sample 1 to be detected, will be reflected and scattered at the sample 1, including diffuse reflection occurring at a surface of the sample 1, and Rayleigh scattering and Raman scattering in the sample 1, and in addition, fluorescent light is also generated from the sample under excitation. In practice, a light intensity for a excited light waveband received by the spectrometer and a light intensity for a Raman scattering waveband received by the spectrometer are also at substantially the same order, because an initial light intensity of the excited light emitted by the light source is significantly larger than the Raman scattering light intensity, and because in the excited light waveband received by the spectrometer, an intensity of backward-Rayleigh scattered light is significantly larger than the intensity of diffusely reflected light.

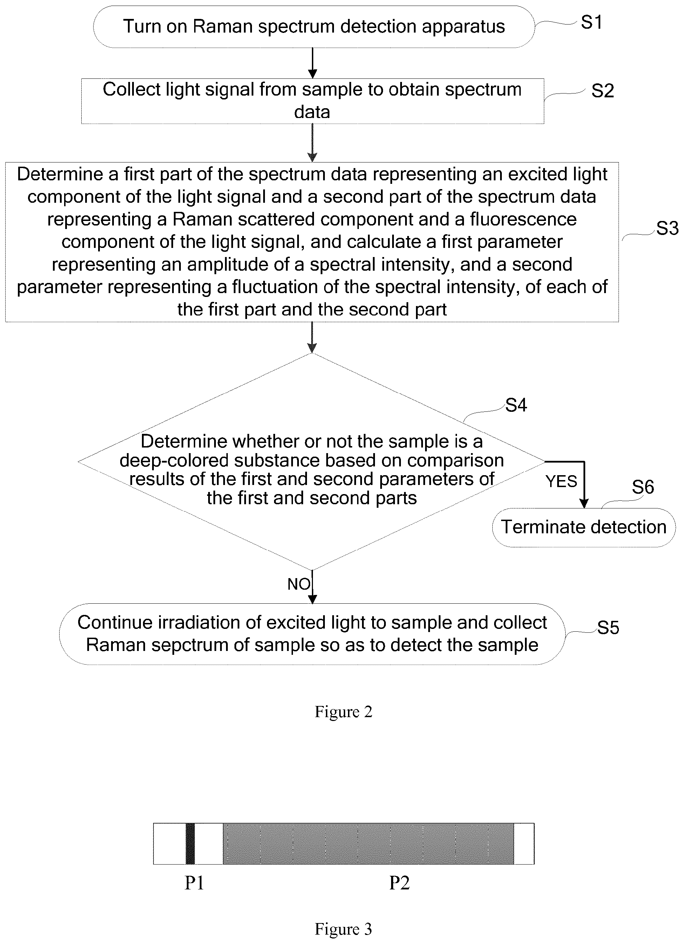

In some embodiments of the present disclosure, the data processor 50 may determine whether or not the sample 1 is a deep-colored substance (for example, a non-transparent substance or a black substance) based on processing and analysis of a excited light component (mainly including a Rayleigh-scattered component) and a Raman scattered component of the spectrum data from the sample. The deep-colored substance has a stronger absorbing capacity to light and thus will generate a weaker Rayleigh scattering effect, and a Rayleigh scattering spectrum has a different wavelength range from a Raman scattering spectrum. Figure 3 is a schematic diagram showing division of spectrum data obtained by the spectrometer, according to an exemplary embodiment of the present disclosure. In Figure 3, a direction transversely from left to right is a direction in which a Raman shift increases, and may correspond to the abscissa axis in the spectrum graph, while the longitudinal coordinates in the spectrum graph may represent spectrums or spectral line intensities. In an example, the Raman shift = $(1/\lambda_0 - 1/\lambda)*10^7$, where $\lambda_0$ is a wavelength of the excited light, $\lambda$ is a wavelength of the Raman light, the unit for the wavelength is nm, and the unit for the Raman shift is $cm^{-1}$. As shown in Figure 3, the data processor 50 may determine or demarcate a first part P1 of the obtained spectrum data representing an excited light waveband (mainly including a Rayleigh-scattered component) of the light signal, which is generated by the sample 1 under irradiation of the excited light 11, and a second part P2 of the spectrum data representing a Raman scattered component and a fluorescence component of the light signal, and analyze and compare the first part P1 representing the excited light waveband and the second part P2 representing the Raman scattered component and the fluorescence component, so as to determine an intensity of Rayleigh scattered light generated by the sample 1 under irradiation of the excited light, to thereby judge whether or not the sample is a deep-colored substance .

In an example, the data processor 50 is configured to determine a part of the spectrum data corresponding to a part of the light signal having a Raman shift in a range from $-10cm^{-1}$ to $10cm^{-1}$ as the first part P1 for representing the excited light waveband, and to determine another part of the spectrum data corresponding to a part of the light signal having a Raman shift in a range from $350cm^{-1}$ to $2000cm^{-1}$ as the second part P2 for representing the Raman scattered component and the fluorescence component. The excited light wavelength is theoretically a wavelength where a Raman shift is equal to zero; however, since there is no strict single-color light source, even laser light has a very narrow waveband, and since a specific and pre-determined value will be selected as $\lambda_0$ in the above Raman shift equation, the part of the light signal having a Raman shift in a range from $-10cm^{-1}$ to $10cm^{-1}$ will fall within the excited light waveband.

In an example, the data processor 50 may calculate a first parameter (for example, a mean value of spectral intensities), which represents an amplitude of a spectral intensity, and a second parameter(for example, standard deviation, variance or the like), which represents a fluctuation or change of the spectral intensity, of each of the first part P1 and the second part P2, compare the first parameter of the first part P1 with the first parameter of the second part P2, and compare the second parameter of the first part P1 with the second parameter of the second part P2, and determine whether or not the sample is a deep-colored substance based on comparison results.

Exemplarily, if the first parameter of the first part P1 representing the excited light component (mainly including a Rayleigh-scattered component) of the light signal generated by the sample 1 under irradiation of the excited light 11 is smaller than the first parameter of the second part P2 represents the Raman scattered component and the fluorescence component, it shows that a weaker Rayleigh scattering effect occurs at an irradiated position of the sample, and that the sample to be detected may be a deep-colored substance or a transparent substance because the deep-colored substance will absorb much excited light while the transparent substance will transmit therethrough the excited light directly; further, if the second parameter of the first part P1 is greater than the second parameter of the second part P2, it shows that the spectrum data of the second part P2 has a smaller intensity fluctuation, and that there is no obvious spectrum peak in the light signal, thus it may be determined that the sample is a deep-colored substance (illustratively, it has been found by inventors of the present application that it is testified by data measured for known samples that under a shorter irradiation duration of the excited light, most of light initially excited from the deep-colored substance is fluorescent light having an easy or smaller spectral intensity or fluctuation, while the transparent substance may quickly emit stronger Raman scattered light which will generate an obvious spectrum peak), then detection of the sample by the Raman detection apparatus may be terminated; otherwise, it may be determined that the sample is a transparent substance, for example transparent liquid.

In one exemplary embodiment, the data processor 50 is configured to calculate the mean value and the standard deviation by using following equations:

$$u = \sum_{i=1}^{n} X_i \Big/ n \quad ,$$

$$\sigma = \sqrt{\frac{1}{n} \sum_{i=1}^{n} (X_i - u)^2} \quad ,$$

where, $u$ represents the mean value, $\sigma$ represents the standard deviation, $X_i$ represents the ith spectrum data (for example, the intensity at the ith sampling point, such as a spectral line intensity), and n represents the number of spectrum data of the first part or the second part (for example, the number of sampling points, such as the number of spectral lines).

Exemplarily, $u1$ and $u2$ represent mean values of the first part P1 and the second part P2 respectively, and $\sigma1$ and $\sigma2$ represent standard deviations of the first part P1 and the second part P2, so that the determination may be made in two steps. In the first step, the mean value of the first part P1 is compared with the mean value of the second part P2. In case that $u1 < u2$, if the spectrum data is weaker near 0cm$^{-1}$ or in a range from -10cm$^{-1}$ to 10cm$^{-1}$, it shows that a weaker Rayleigh scattering effect occurs at the sample, and the sample may be a deep-colored substance or a transparent substance, otherwise the sample is other colored substance.

After determining the sample to be detected is a deep-colored substance or a transparent liquid in the first step, a second step is implemented to compare the standard deviation of the first part P1 with the standard deviation of the second part P2. The present disclosure is not limited to the standard deviation, and other characteristic representing a fluctuation of the parameter, such as a variance, may also be adopted. If $\sigma1 > \sigma2$, it shows that the spectrum data of the second part P2 has a fluctuation smaller than that of the spectrum data of the first part P1, for example the fluctuation of the spectrum data in a range from 350cm$^{-1}$ to 2000cm$^{-1}$ is smaller than the fluctuation of the spectrum data near 0cm$^{-1}$ or in a range from -10cm$^{-1}$ to 10cm$^{-1}$, and thus it may be determined that the sample is a deep-colored substance, otherwise it may be determined the sample is a transparent substance, such as a transparent liquid.

After determining the sample is a deep-colored substance, corresponding measures will be taken to ensure detection security because the deep-colored substance has a larger possibility of being degraded, ablated, burned or even exploded under irradiation of the laser light. Exemplarily, the Raman spectrum detection apparatus 100 may further includes a controller 60, which may, when it is determined by the data processor 50 that the sample 1 is a deep-colored substance, send a control signal to the light source 10, so as to reduce power of the light source, or to turn off the light source to stop irradiation of the excited light onto the sample 1, terminating detection of the sample by the Raman spectrum detection apparatus.

In some embodiment, as shown in Figure 1, the optical device or assembly 20 may establish or form a light path 21, for collecting the light signal, including the Raman light component, the fluorescence component and the excited light component, from the sample 1.

In an example, the exemplary Raman spectrum detection apparatus 100 shown in Figure 1 may be provided with a beam splitter 25 disposed in the light path 21 and configured for reflecting the excited light 11 from the light source 10 to the sample 1 and for transmitting therethrough at least a part of the light signal from the sample 1 to the spectrometer 30. A convergent lens 24 may be further provided in the light path 21 and configured to converge the excited light 11 onto the sample 1 and to collect the light signal from the sample 1.

Embodiments of the present disclosure further provide a method of monitoring security of detecting a sample by a Raman spectrum detection apparatus. Referring to Figures 1-3, the method includes following steps:

S1: turning on the Raman spectrum detection apparatus, so that excited light is emitted by a light source 10 within a preset time duration and guided to a sample 1; the preset time duration is shorter than a time duration for a normal or conventional Raman spectrum detection, for example, is 0.5 milliseconds to 5 milliseconds, which may prevent dangerous events from occurring due to violent reaction of the excited light with the sample caused by too large energy of the excited light and avoid the sample from be damaged due to irradiation of the laser light within a longer time period;

S2: collecting a light signal generated by the sample 1 under irradiation of the excited light 11 and generating spectrum data representing the light signal; in an example, the light signal from the sample may be collected within the preset time duration, for example, within a time duration of 5ms;

S3: determining a first part P1 of the spectrum data representing an excited light component (mainly including a Rayleigh-scattered component) of the light signal and a second part P2 of the spectrum data representing a Raman scattered component and a fluorescence component of the light signal, and calculating a first parameter (for example, a mean value of spectral intensities), which represents an amplitude of a spectral intensity, and a second parameter(for example, standard deviation, variance or the like), which represents a fluctuation or change of the spectral intensity, of each of the first part and the second part; and

S4: comparing the first parameter of the first part with the first parameter of the second part, and comparing the second parameter of the first part with the second parameter of the second part, and determining whether or not the sample is a deep-colored substance based on comparison results.

In some examples, as described above, the method may further include following steps:

S5: when determining the sample is not a deep-colored substance, continuing irradiation of the excited light to the sample, and continuing to collect the Raman spectrum of the sample by the Raman spectrum detection apparatus so as to detect the sample; and

S6: terminating the detection if it is determined that the sample is a deep-colored substance.

In some embodiment, as described above, the step S4 may include:

determining the sample is a deep-colored substance, if the first parameter of the first part is smaller than the first parameter of the second part and the second parameter of the first part is greater than the second parameter of the second part; and

determining the sample is a transparent substance (for example, transparent liquid), if the first parameter of the first part is smaller than the first parameter of the second part and the second parameter of the first part is smaller than the second parameter of the second part.

Exemplarily, the mean value and the standard deviation may be calculated by using following equations:

$$u = \sum_{i=1}^{n} X_i \bigg/ n \, ,$$

$$\sigma = \sqrt{\frac{1}{n} \sum_{i=1}^{n} (X_i - u)^2} \, ,$$

where, $u$ represents the mean value, $\sigma$ represents the standard deviation, $X_i$ represents the ith spectrum data (for example, the intensity at the ith sampling point, such as a spectral line intensity), and n represents the number of spectrum data of the first part or the second part (for example, the number of sampling points, such as the number of spectral lines).

In one embodiment, a part of the obtained spectrum data corresponding to a part of the light signal having a Raman shift in a range from -10cm$^{-1}$ to 10cm$^{-1}$ may be determined as the first part P1 for representing the excited light waveband (mainly including a Rayleigh-scattered component) from the sample, and another part of the spectrum data corresponding to a part of the light signal having a Raman shift in a range from 350cm$^{-1}$ to 2000cm$^{-1}$ may be determined as the second part P2 for representing the Raman scattered component and the fluorescence component from the sample.

In embodiments of the present disclosure, the light signal generated by the sample, which is to be detected by the Raman spectrum detection apparatus, under irradiation of the excited light, is collected so as to obtain corresponding spectrum data, the spectrum data is processed and analyzed so as to compare spectral intensities and fluctuations thereof, for example, to calculate and compare mean values an standard deviations of the spectrum data, thereby the type of substance of the sample may be substantially determined based on the Raman scattered component, the fluorescence component and the excited light component (mainly including the Rayleigh-scattered component) of the light signal from the sample, so that degradation, ablation, burning or even exploding of the detected sample caused due to too larger power density of the laser light may be avoided, ensuring security of the sample and a user during use of the Raman spectrometer.

In the above description, illustrative embodiments have been described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware. Such existing hardware may include one or more Central Processing Units (CPUs), digital signal processors (DSPs), application-specific-integrated-circuits, field programmable gate arrays (FPGAs) computers or the like.

Here, unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Illustrative embodiments have been described above with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware.

It will be understood by those skilled in the art that the present disclosure includes devices for implementing one or more of methods, steps, operations or functions of modules in the present application. These devices may be specially designed and manufactured for desired purposes, or may include known devices in general-purpose computers. These devices have computer programs stored therein which are selectively activable or reconstructable. Such computer programs may be stored in a device (for example, computer) readable medium or in any kind of medium adapted to store electronic instructions therein and to be coupled with a bus, the computer readable medium includes but is not limited any type of disk (including floppy disk, hard disk, compact disc, CD-ROM and magneto-optical disk), ROM (Read-Only Memory), RAM (Random Access Memory), EPROM (Erasable Programmable Read-Only Memory), EEPROM (Electrically Erasable Programmable Read-Only Memory), flash, magnetic card or optical card. That is, the readable medium include any medium for storing or transmitting information therein in readable form devices (for example, computer).

Although several exemplary embodiments of the present disclosure have been shown and described, it would be appreciated by those skilled in the art that various changes or modifications may be made in form and detail in these embodiments without departing from the principles and spirit of the present disclosure, the scope of which is defined in the claims and their equivalents.

**Claims**

1. A method of monitoring detection security of a Raman spectrum detection apparatus, comprising steps of:

   emitting excited light by a light source and guiding the excited light to a sample to be detected;
   collecting a light signal generated by the sample under irradiation of the excited light and generating spectrum data representing the light signal;

   determining a first part of the spectrum data representing an excited light component of the light signal and a second part of the spectrum data representing a Raman scattered component and a fluorescence component of the light signal;
   calculating a first parameter, which represents an amplitude of a spectral intensity, and a second parameter, which represents a fluctuation of the spectral intensity, of each of the first part and the second part;
   comparing the first parameter of the first part with the first parameter of the second part, and comparing the second parameter of the first part with the second parameter of the second part; and
   determining whether or not the sample is a deep-colored substance based on comparison results.

2. The method according to claim 1, wherein the step of determining whether or not the sample is a deep-colored substance based on comparison results comprises:

   determining the sample is a deep-colored substance, if the first parameter of the first part is smaller than the first parameter of the second part and the second parameter of the first part is greater than the second parameter of the second part; and
   determining the sample is a transparent substance, if the first parameter of the first part is smaller than a mean value of the second part and the second parameter of the first part is smaller than the second parameter of the second part.

3. The method according to claim 1 or 2, wherein the first parameter includes a mean value of spectral intensities, and the second parameter includes a standard deviation of spectral intensities.

4. The method according to claim 3, wherein the mean value and the standard deviation are calculated by using following equations:

$$u = \sum_{i=1}^{n} X_i \bigg/ n \,,$$

$$\sigma = \sqrt{\frac{1}{n} \sum_{i=1}^{n} (X_i - u)^2} \,,$$

where, $u$ represents the mean value, $\sigma$ represents the standard deviation, $X_i$ represents the ith spectrum data, and n represents the number of spectrum data of the first part or the second part.

**5.** The method according to any one of claims 1-4, wherein the first part represents spectrum data of the light signal having a Raman shift within a range from -10cm$^{-1}$ to 10cm$^{-1}$, and the second part represents spectrum data of the light signal having a Raman shift within a range from 350cm$^{-1}$ to 2000cm$^{-1}$.

**6.** The method according to any one of claims 1-5, further comprising:

stopping irradiation of the excited light to the sample if it is determined that the sample is a deep-colored substance.

**7.** The method according to any one of claims 1-6, wherein

emitting the excited light by the light source within a preset time duration so as to irradiate the sample.

**8.** The method according to any one of claims 1-7, wherein the Raman spectrum detection apparatus comprises a spectrometer configured for detecting the light signal generated by the sample under irradiation of the excited light so as to generate the Raman spectrum of the detected sample, and

the step of collecting the light signal generated by the sample under irradiation of the excited light and generating spectrum data representing the light signal comprises: collecting by the spectrometer the light signal generated by the sample under irradiation of the excited light so as to generate the spectrum data.

**9.** The method according to any one of claims 1-8, wherein the excited light component of the light signal from the sample includes a Rayleigh-scattered component.

**10.** A Raman spectrum detection apparatus, comprising:

a spectrometer configured to collect a light signal generated by a sample under irradiation of excited light so as to generate spectrum data representing the light signal; and
a data processor configured to:

receive the spectrum data from the spectrometer, and determining a first part of the spectrum data representing an excited light component of the light signal and a second part of the spectrum data representing a Raman scattered component and a fluorescence component of the light signal;

calculate a first parameter, which represents an amplitude of a spectral intensity, and a second parameter, which represents a fluctuation of the spectral intensity, of each of the first part and the second part;
compare the first parameter of the first part with the first parameter of the second part, and compare the second parameter of the first part with the second parameter of the second part; and
determine whether or not the sample is a deep-colored substance based on comparison results.

**11.** The Raman spectrum detection apparatus according to claim 10, wherein the data processor is further configured to:

determine the sample is a deep-colored substance, if the first parameter of the first part is smaller than the first parameter of the second part and the second parameter of the first part is greater than the second parameter of the second part; and
determine the sample is a transparent substance, if the first parameter of the first part is smaller than the first parameter of the second part and the second parameter of the first part is smaller than the second parameter of the second part.

**12.** The Raman spectrum detection apparatus according to claim 10 or 11, wherein the first parameter includes a mean value of spectral intensities, and the second parameter includes a standard deviation of spectral intensities.

**13.** The Raman spectrum detection apparatus according to claim 12, wherein the data processor is further configured to calculate the mean value and the standard deviation by using following equations:

$$u = \sum_{i=1}^{n} X_i \Big/ n \; ,$$

$$\sigma = \sqrt{\frac{1}{n}\sum_{i=1}^{n}(X_i - u)^2} \; ,$$

where, $u$ represents the mean value, $\sigma$ represents the standard deviation, $X_i$ represents the ith spectrum data, and n represents the number of spectrum data of the first part or the second part.

**14.** The Raman spectrum detection apparatus according to any one of claims 10-13, wherein the data processor is further configured to:

determine a part of the spectrum data corresponding to the light signal having a Raman shift in a range from -10cm$^{-1}$ to 10cm$^{-1}$ as the first part, and determine another part of the spectrum data corresponding to the light signal having a Raman shift in a range from 350cm$^{-1}$ to 2000cm$^{-1}$ as the second part.

**15.** The Raman spectrum detection apparatus according to any one of claims 10-14, further comprising:

a light source for emitting the excited light; and a controller configured to control the light source to stop irradiation of the excited light to the sample when the sample is determined to be the deep-colored substance by the data processor.

**16.** The Raman spectrum detection apparatus according to claim 15, wherein the light source is configured to emit the excited light to irradiate the sample within a preset time duration, and

the spectrometer is configured to collect the light signal generated by the sample under irradiation of the excited light so as to generate the spectrum data, based on which the data processor determines whether or not the sample is the deep-colored substance.

**17.** The Raman spectrum detection apparatus according to claim 16, wherein the preset time duration is in a range from 0.5 milliseconds to 5 milliseconds.

**18.** The Raman spectrum detection apparatus according to any one of claims 10-17, wherein the excited light component of the light signal from the sample includes a Rayleigh-scattered component.

Figure 1

Turn on Raman spectrum detection apparatus — S1

Collect light signal from sample to obtain spectrum data — S2

Determine a first part of the spectrum data representing an excited light component of the light signal and a second part of the spectrum data representing a Raman scattered component and a fluorescence component of the light signal, and calculate a first parameter representing an amplitude of a spectral intensity, and a second parameter representing a fluctuation of the spectral intensity, of each of the first part and the second part — S3

Determine whether or not the sample is a deep-colored substance based on comparison results of the first and second parameters of the first and second parts — S4

YES

Terminate detection — S6

NO

Continue irradiation of excited light to sample and collect Raman sepctrum of sample so as to detect the sample — S5

Figure 2

P1          P2

Figure 3

## INTERNATIONAL SEARCH REPORT

| International application No. |
|---|
| **PCT/CN2018/122068** |

| A. | CLASSIFICATION OF SUBJECT MATTER |
|---|---|

G01N 21/65(2006.01)i

According to International Patent Classification (IPC) or to both national classification and IPC

| B. | FIELDS SEARCHED |
|---|---|

Minimum documentation searched (classification system followed by classification symbols)

G01N21/-

Documentation searched other than minimum documentation to the extent that such documents are included in the fields searched

Electronic data base consulted during the international search (name of data base and, where practicable, search terms used)

CNPAT, CNKI, WPI, EPODOC: 王红球, 左佳倩, 陈卓, 同方威视技术股份有限公司, 喇曼, 拉曼, 光谱, 激发光, 幅值, 峰值, 均值, 检测, 监测, 探测, 物品, 液体, 待测物, 被检物, 深色, 透明, 颜色, 黑色, 发热, 烧蚀, 损毁, 损坏, 点燃, 爆炸, 比较, 瑞利, 散射, raman, detect+, secur+, safety, spectru+, spectra+, heat+, thermal+, hot+, color, colour, compar+, dark, intensity

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 108152265 A (NUCTECH COMPANY LIMITED) 12 June 2018 (2018-06-12) claims 1-18, description, paragraphs [0052]-[0085], and figures 1-3 | 1-18 |
| PX | CN 207923718 U (NUCTECH COMPANY LIMITED) 28 September 2018 (2018-09-28) claims 1-9, description, paragraphs [0052]-[0085], and figures 1-3 | 1-18 |
| A | CN 106770176 A (NUCTECH COMPANY LIMITED) 31 May 2017 (2017-05-31) description, paragraphs [0045]-[0074], and figures 1-7 | 1-18 |
| A | CN 206479455 U (NUCTECH COMPANY LIMITED) 08 September 2017 (2017-09-08) entire document | 1-18 |
| A | CN 105829872 A (THERMO SCIENTIFIC PORTABLE ANALYTICAL INSTRUMENTS INC.) 03 August 2016 (2016-08-03) entire document | 1-18 |
| A | US 2017241863 A1 (CORNING INC.) 24 August 2017 (2017-08-24) entire document | 1-18 |
| A | US 2008100835 A1 (PD-LD, INC.) 01 May 2008 (2008-05-01) entire document | 1-18 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 February 2019** | **12 March 2019** |

| Name and mailing address of the ISA/CN | Authorized officer |
|---|---|
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/122068**

| Patent document cited in search report | | | Publication date (day/month/year) | Patent family member(s) | | | Publication date (day/month/year) |
|---|---|---|---|---|---|---|---|
| CN | 108152265 | A | 12 June 2018 | None | | | |
| CN | 207923718 | U | 28 September 2018 | None | | | |
| CN | 106770176 | A | 31 May 2017 | EP | 3339843 | A1 | 27 June 2018 |
| | | | | WO | 2018121799 | A1 | 05 July 2018 |
| | | | | CN | 207779896 | U | 28 August 2018 |
| | | | | US | 2018180551 | A1 | 28 June 2018 |
| | | | | CN | 107991284 | A | 04 May 2018 |
| CN | 206479455 | U | 08 September 2017 | None | | | |
| CN | 105829872 | A | 03 August 2016 | WO | 2015094512 | A1 | 25 June 2015 |
| | | | | US | 9400271 | B2 | 26 July 2016 |
| | | | | JP | 2017500568 | A | 05 January 2017 |
| | | | | US | 2015168367 | A1 | 18 June 2015 |
| | | | | EP | 3084403 | A1 | 26 October 2016 |
| US | 2017241863 | A1 | 24 August 2017 | WO | 2017146922 | A1 | 31 August 2017 |
| | | | | EP | 3420343 | A1 | 02 January 2019 |
| US | 2008100835 | A1 | 01 May 2008 | US | 8508729 | B2 | 13 August 2013 |
| | | | | US | 2012019820 | A1 | 26 January 2012 |
| | | | | US | 7982869 | B2 | 19 July 2011 |
| | | | | US | 8125635 | B2 | 28 February 2012 |
| | | | | US | 8339598 | B2 | 25 December 2012 |
| | | | | US | 2013077094 | A1 | 28 March 2013 |
| | | | | US | 2012212734 | A1 | 23 August 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201711442673